# EUROPÄISCHE PATENTANMELDUNG

(11) **EP 3 308 616 A1**
(43) Veröffentlichungstag der Anmeldung: **18.04.2018**
(21) Anmeldenummer: 17401106.4
(22) Anmeldetag: 05.10.2017
(51) Int. Cl.: A01B 69/00, A01B 79/00, A01B 69/04, G06F 3/041

(54) **LANDWIRTSCHAFTLICHES MASCHINENSYSTEM**

(30) Priorität: 14.10.2016 DE 102016119603
(71) Anmelder: Amazonen-Werke H. Dreyer GmbH & Co. KG, 49205 Hasbergen (DE)
(72) Erfinder: Kötter, Heiner, 49086 Osnabrück (DE)

(57) **Zusammenfassung**

Landwirtschaftliches Maschinensystem umfassend ein Anzeigesystem (1) zur Ausgabe von Informationen, eine mit dem Anzeigesystem verbundene elektronische Steuereinheit (2) zur Berechnung und/oder Ausgabe von Steuersignalen auf der Basis von Sollwertdaten (3.1, 4), eine zumindest mit der Steuereinheit (2) verbundene Kontrolleinheit (3) zur Vorgabe von Sollwertdaten (3.1, 4) an die Steuereinheit (2) und/oder zur Vorgabe einer Quelle von Sollwertdaten (3.1, 4) für die Steuereinheit (2) und eine landwirtschaftliche Bearbeitungsmaschine (5) mit zumindest einem durch Steuersignale der Steuereinheit (2) gesteuerten Aktor zur Anpassung eines Bearbeitungsparameters der landwirtschaftlichen Bearbeitungsmaschine (5). Um ein verbessertes landwirtschaftliches Maschinensystem bereitzustellen ist vorgesehen, dass die elektronische Steuereinheit (2) ausgebildet ist, Signale an die Anzeigeeinheit (1) zu übermitteln, so dass dem Benutzer des Maschinensystems die Quelle der verwendeten Sollwertdaten (3.1, 4) für die Berechnung und/oder Ausgabe der Steuersignale für die Ansteuerung des zumindest einen Aktors der Bearbeitungsmaschine (5) anzeigbar ist.

## Beschreibung

Die vorliegende Erfindung betrifft ein landwirtschaftliches Maschinensystem gemäß des Oberbegriffs des Patentanspruchs 1.

Derartige landwirtschaftliche Maschinensysteme werden zur elektronischen Steuerung von landwirtschaftlichen Bearbeitungsprozessen verwendet. Die Bearbeitung kann mittels verschiedenartiger landwirtschaftlicher Maschinen, wie beispielsweise Sämaschinen, Düngerstreuer, Feldspritzen Bodenbearbeitungsmaschinen oder ähnlichem erfolgen. Diese Maschinen führen typischerweise elektronisch gesteuerte Bearbeitungsprozesse durch, für die mittels einer Steuereinheit elektronische Steuersignale berechnet und/oder ausgegeben werden. Diese Steuersignale können beispielsweise die Einstellung einer Ausbringmenge oder- rate, einer Arbeitsbreite, einer Bearbeitungstiefe oder ähnliche Vorgaben umfassen. Hierfür werden Sollwertvorgaben an die elektronische Steuereinheit übermittelt, die diese dann verwendet, um Steuersignale zur Ansteuerung von Aktoren auszugeben und/oder zu berechnen. Die Sollwertvorgaben können beispielsweise als Applikationskarte vorliegen. In diesem Fall werden in einer in dem Maschinensystem hinterlegten Datei ortsbezogene Sollwerte gespeichert, wie beispielsweise eine Bearbeitungstiefe oder eine Ausbringmenge. Mittels eines Positionserfassungssystems, wie GPS, können dann durch die Steuereinheit die zur Einstellung des Sollwertes an der jeweiligen Position notwendigen Steuersignale berechnet und/oder ausgegeben werden.

Ein solches Steuersystem wird bei modernen Landmaschinen typischerweise nach dem ISO-Bus Standard, beschrieben in der Norm ISO 11783, aufgebaut. Hierbei erfolgt die Ermittlung der Steuersignale durch eine sogenannte electronic control unit (ECU), welche beispielsweise auf einer an eine Zugmaschine angehängte landwirtschaftliche Maschine angeordnet sein kann. Auf der Zugmaschine ist vorzugsweise ein Terminal platziert, welches dem Benutzer Informationen anzeigt und/oder zur Eingabe von Benutzervorgaben geeignet ist und welches als virtual terminal (VT) bezeichnet wird. Beispielsweise kann das Terminal über einen Touchscreen zur Anzeige und Eingabe verfügen. Zudem ist typischerweise ein Taskcontroller als Kontrolleinheit vorgesehen, welcher entsprechend der geplanten Bearbeitungsprozesse Vorgaben von Sollwertdaten an die ECU übermittelt bzw. vermittelt, also die Verbindung zwischen der ECU und anderen Sollwertquellen herstellt.

Diese Sollwertquellen können vielfältiger Art sein, so kann vorgesehen sein, dass eine manuelle Eingabe durch den Benutzer in das Terminal zur Vorgabe eines Sollwertes führt. Eine andere Möglichkeit sind oben beschriebene Applikationskarten ggf. in Verbindung mit Sensoren, welche dem Maschinensystem zugeordnet sind. Beispielsweise kann es vorgesehen sein, dass ein Stickstoffsensor beim Düngevorgang die jeweilige Nährstoffversorgung der Pflanzen im Bereich des Maschinensystems misst und diese Messdaten in Steuersignale zur Anpassung der Ausbringmenge durch die Steuereinheit umgesetzt werden. Eine solche Messung kann auch kombiniert werden mit vorhandenen Kartendaten, beispielsweise Ertragsdaten oder sonstigen Applikationskarten.

Nachteilig am Stand der Technik ist, dass zunehmend viele verschiedene Quellen von Sollwertvorgaben insbesondere gleichzeitig infrage kommen, was bei dem jeweiligen Benutzer zu Verwirrung und zur Fehlbearbeitung führen kann.

Aufgabe der vorliegenden Erfindung ist es daher ein verbessertes landwirtschaftliches Maschinensystem bereitzustellen, welches die Nachteile des Standes der Technik behebt.

Diese Aufgabe wird durch ein landwirtschaftliches Maschinensystem gemäß Anspruch 1 gelöst, wobei die elektronische Steuereinheit ausgebildet ist, Signale an die Anzeigeeinheit zu übermitteln, so dass dem Benutzer des Maschinensystems die Quelle der verwendeten Sollwertdaten für die Berechnung und/oder Ausgabe der Steuersignale für die Ansteuerung des zumindest einen Aktors der Bearbeitungsmaschine anzeigbar ist. Es wird also dem Benutzer ein optischer, akustischer oder haptischer Hinweis gegeben, welche Sollwertdaten aktuell für die Ermittlung der Steuersignale durch die Steuereinheit verwendet werden. Hierfür muss die Steuereinheit auch tatsächlich mit der Quelle der Sollwertvorgaben gekoppelt sein. Daher ist das Kontrollsystem vorzugsweise ausgebildet eine Kopplung zwischen einer Quelle von Sollwertdaten und der Steuereinheit aufzubauen. Auf diese Weise wird ein Informationsfluss von Sollwertdaten von der Quelle an die Steuereinheit fest vorgegeben, so dass aus diesen Sollwertdaten durch die Steuereinheit Steuersignale berechnet und/oder ausgegeben werden können. Bevorzugt übernimmt die Kontrolleinheit, beispielsweise der Task-Controller, hier eine übergeordnete Steuerfunktion der Steuereinheit, so dass bei Vorliegen mehrerer möglicher Quellen für Sollwertvorgaben oder bei einem Vorliegen einer neuen Quelle für Sollwertvorgaben dem Benutzer die Möglichkeit gegeben wird eine Quelle auszuwählen bzw. die neue Quelle auszuwählen oder abzulehnen. Hierdurch wird eine Kopplung zwischen der Steuereinheit und der Quelle für die Sollwertdaten etabliert. Anschließend erfolgt die Übermittlung der Sollwertdaten vorzugsweise direkt an die Steuereinheit, beispielsweise zwischen Sensor und Steuereinheit oder zwischen Anzeigeeinheit bzw. Benutzerschnittstelle (VT) und Steuereinheit. Es kann aber auch eine Kommunikation über die Kontrolleinheit erfolgen, die Sollwertvorgaben also von der Kontrolleinheit an die Steuereinheit übergeben werden.

In einer vorteilhaften Weiterbildung ist das Kontrollsystem ausgebildet eine Kopplung zwischen einer Quelle von Sollwertdaten und der Steuereinheit aufzubauen. Auf diese Weise wird ein Informationsfluss von Sollwertdaten von der Quelle an die Steuereinheit fest vorgegeben, so dass aus diesen Sollwertdaten durch die Steuereinheit Steuersignale berechnet und/oder ausgegeben werden können.

Bei mehreren Quellen von Sollwertdaten erfolgt die Auswahl der jeweils gewünschten Quelle von dem Benutzer durch eine Eingabe, vorzugsweise in das Anzeigesystem bzw. Benutzerschnittstelle, insbesondere Virtual Terminal, wodurch eine Kopplung der Quelle der Sollwertdaten mit der Steuereinheit etabliert wird.

In einer bevorzugten Weiterbildung erfolgt eine Sollwertvorgabe durch eine manuelle Eingabe eines Benutzers, vorzugsweise durch Eingabe in das Anzeigesystem bzw. eine Benutzerschnittstelle, und ist die elektronische Steuereinheit ausgebildet, Signale an die Anzeigeeinheit zu übermitteln, so dass dem Benutzer anzeigbar ist, wenn manuell eingegebene Sollwertvorgaben zur Berechnung und/oder Ausgabe der Steuersignale durch die Steuereinheit für die Ansteuerung des zumindest einen Aktors der Bearbeitungsmaschine verwendet werden. Auf diese Weise kann der Benutzer Sollwertvorgaben in das System manuell eingeben und wird dem Benutzer jeweils angezeigt, falls diese manuelle Eingabe für die Ermittlung von Steuersignalen verwendet wird.

In einer vorteilhaften Weiterbildung der Erfindung ist ein Positionserfassungssystem mit der Steuereinheit und/oder der Kontrolleinheit verbunden und zudem eine Applikationskarte als Quelle von Sollwertdaten in dem Maschinensystem hinterlegt und dem Benutzer anzeigbar, wenn zur Berechnung und/oder Ausgabe der Steuersignale durch die Steuereinheit für die Ansteuerung des zumindest einen Aktors der Bearbeitungsmaschine Sollwertdaten aus der Applikationskarte verwendet werden. Es kann also durch die Steuereinheit eine Kopplung zwischen Applikationskarte und Positionserfassungssystem sowie Steuereinheit veranlasst und dem Benutzer eine entsprechende Rückmeldung gegeben werden. In diesem Fall werden die Steuersignale durch Sollwertvorgaben der Applikationskarte in Abhängigkeit der momentanen Position des Maschinensystems durch die Steuereinheit, insbesondere ECU, erzeugt und dem Benutzer eine entsprechende Rückmeldung gegeben.

In einer möglichen Weiterbildung der Erfindung ist ein Sensorsystem zur Erfassung von Umgebungsparametern vorhanden, welches mit der Steuereinheit und/oder der Kontrolleinheit zur Ermittlung von Steuersignalen aus den Umgebungsparametern verbunden ist und dem Benutzer anzeigbar ist, wenn zur Berechnung und/oder Ausgabe der Steuersignale durch die Steuereinheit für die Ansteuerung des zumindest einen Aktors der Bearbeitungsmaschine Umgebungsparameter des Sensorsystems verwendet werden. Die Steuereinheit wird also mit dem jeweils ausgewählten Sensor beispielsweise in Reaktion auf eine Benutzereingabe in das Anzeigesystem derart gekoppelt, dass die Sollwertdaten zur Berechnung und/oder Ausgabe der Steuersignale durch den Sensor bereitgestellt werden und dies dem Benutzer angezeigt wird.

Als Quelle für die Sollwertvorgaben sind also manuelle Eingaben des Benutzers, Sensordaten und/oder Applikationskarten und auch weitere Quellen denkbar. Die Sensoren können oben erwähnte spektroskopische Sensoren zur Messung der Stickstoffversorgung oder Pflanzenerkennung, Wetterdatensensoren (Temperatur, Druck, Windstärke, Windrichtung usw.), Bodenbeschaffenheitssensoren, wie Mikrowellensensoren, Infrarotsensoren umfassen. Es können auch Sensoren vorgesehen sein, die die Position oder Lage der Maschine relativ zur Umgebung umfassen, wie beispielsweise Ultraschallsensoren, Laserscanner oder Radarsensoren oder GPS-Sensoren. Die Sensoren können direkt mit der elektronischen Steuereinheit und/oder der Kontrolleinheit verbunden sein.

Weitere vorteilhafte Aspekte der Erfindung werden durch die Ausführungsbeispiele und die zugehörige Beispielsbeschreibung dargelegt, hierbei zeigen
- Fig. 1: schematischer Aufbau des erfindungsgemäßen Maschinensystems,
- Fig. 2: ein Anzeigesystem eines ersten erfindungsgemäßen Maschinensystems und
- Fig. 3: ein Anzeigesystem eines zweiten erfindungsgemäßen Maschinensystems.

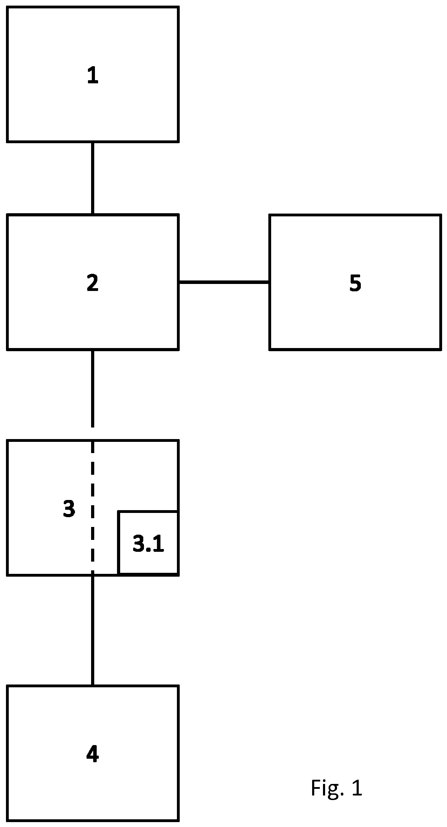

Der schematische Aufbau eines erfindungsgemäßen Maschinensystems ist in Fig. 1 dargestellt. Ein Anzeigesystem 1 ist zur Ausgabe von Informationen ausgelegt. Die Informationen können insbesondere visuell, aber auch akustisch oder haptisch ausgegeben werden. Auch kann das Anzeigesystem als Benutzerschnittstelle mit Eingabemöglichkeiten beispielsweise in Form eines berührungssensitiven Bildschirms ausgebildet sein. Das Anzeigesystem ist bevorzugt in der Kabine einer landwirtschaftlichen Zugmaschine oder selbstfahrenden Maschine angeordnet.

Das Anzeigegerät 1 ist mittels einer Schnittstelle verbunden mit einer elektronischen Steuereinheit 2. Die Schnittstelle ist bevorzugt nach dem ISOBus-Standard ausgebildet. Die Steuereinheit 2 übermittelt Daten zur Anzeige an das Anzeigegerät 1, um beispielsweise durch die Steuereinheit ermittelte Maschinenparameter oder von der Steuereinheit an die landwirtschaftliche Maschine übermittelte Steuersignale auf dem Anzeigegerät auszugeben. Es ist auch vorgesehen, dass das Anzeigegerät als Benutzerschnittstelle eingegebene Daten an die Steuereinheit 2 übermitteln kann. Die Steuereinheit ist bevorzugt an der Zugmaschine oder einer angehängten landwirtschaftlichen Maschine angeordnet.

Die elektronische Steuereinheit 2 ist mit einer Kontrolleinheit 3 verbunden, welche die landwirtschaftliche Maschine bzw. den durchgeführten Arbeitsprozess vorzugsweise als sogenannter Task Controller überwacht. Die Kontrolleinheit 3 ist zu diesem Zweck ausgebildet, Sollwertdaten an die Steuereinheit 2 zu übermitteln, welche dann von der Steuereinheit als Steuersignale an die mit der Steuereinheit verbundene landwirtschaftliche Maschine 5 ausgegeben oder in solche Steuersignale umgerechnet werden. Ein oder mehrere Aktoren an der landwirtschaftlichen Maschine werden dann entsprechend der übermittelten Steuersignale angesteuert.

Alternativ oder zusätzlich ist die Kontrolleinheit 3 ausgebildet eine direkte Kopplung zwischen einer Quelle von Sollwertdaten 4, wie beispielsweise einem oder mehreren Sensoren, manuellen Eingaben und/oder Applikationskarten und der Steuereinheit zu etablieren. Diese direkte Kopplung ist durch die gestrichelte Linie in Fig. 1 angedeutet. Zu diesem Zweck wird bei mehreren gleichzeitig vorliegenden Quellen bevorzugt eine Eingabemaske auf dem Anzeigegerät angezeigt und dem Benutzer die Möglichkeit gegeben zumindest eine alternative Quelle oder eine aus mehreren Quellen oder auch mehrere Quellen gleichzeitig auszuwählen. Anschließend erfolgt eine Kopplung zwischen der Steuereinheit 2 und der Quelle oder den mehreren Quellen für die Sollwertdaten 4. Die Sollwertdaten können alternativ auch durch die Kontrolleinheit 3 übermittelt oder in dieser beispielsweise in Form von Applikationskarten 3.1 vorliegen.

Wird die Kopplung zwischen der Steuereinheit 2 und der Quelle der Sollwertdaten unterbrochen, beispielsweise durch eine fehlerhafte oder getrennte Steckverbindung eines Sensors, so kann in diesem Fall eine Anzeige auf der Anzeigeeinheit 1 durch die Steuereinheit 2 oder die Kontrolleinheit 3 generiert werden und dem Benutzer beispielsweise die Möglichkeit gegeben werden eine alternative Quelle für Sollwertdaten auszuwählen, beispielsweise kann dies eine manuelle Eingabe eines festen Sollwertes sein.

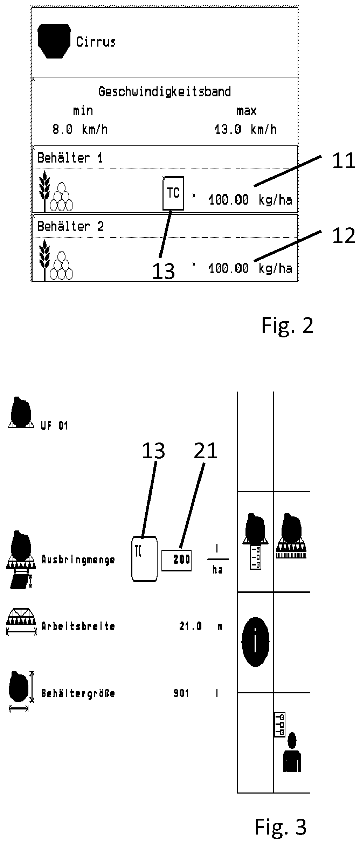

Ein Anzeigesystem eines ersten erfindungsgemäßen Maschinensystems ist in Fig. 2 dargestellt. Es zeigt die Anzeige eines Terminals zur Steuerung einer Sämaschine, mit verschiedenen Parametern, wie der aktuellen und der maximal möglichen Geschwindigkeit. Die landwirtschaftliche Maschine verfügt über zwei Behälter zur Aufbewahrung von Saatgut und/oder Dünger. Dargestellt ist die jeweils manuell eingegebene Ausbringmenge 11, 12 für den jeweiligen Behälter, jeweils 100 kg/ha. Diese in das Anzeigesystem manuell eingegebene Ausbringmenge wird als erste Quelle für Sollwertvorgaben aufgefasst und an das Steuersystem übermittelt und durch dieses in Steuersignale zur Ansteuerung beispielsweise einer Dosiertrommel konvertiert, so dass bei der in der Steuereinheit hinterlegten Arbeitsbreite und Geschwindigkeit die richtige Menge an Saatgut oder Dünger auf der Fläche ausgebracht wird.

Im vorliegenden Fall ist jedoch für den Behälter 1 zusätzlich ein Symbol 13 angezeigt. Dieses zeigt dem Benutzer eine feste Kopplung an zwischen einer zweiten Quelle für Sollwertvorgaben, einer Applikationskarte, und der Steuereinheit. Für den Behälter 2 dient als Sollwertvorgaben also aktuell nicht die manuelle Eingabe von Sollwertvorgaben in das Anzeigesystem, also die eingetragenen 100 kg/ha, sondern die Vorgaben einer hinterlegten Applikationskarte.

Ein zweites erfindungsgemäßes Anzeigesystem ist in Fig. 3 dargestellt am Beispiel einer Feldspritze. Wiederum sind verschiedene Maschinenparameter, wie Arbeitsbreite und Behältergröße angegeben. Die Ausbringmenge der Feldspritze lässt sich durch manuelle Eingabe in das Anzeigesystem als erste Quelle für Sollwertvorgaben 21 festlegen, im vorliegenden Fall 200 l/ha. Wäre die Steuereinheit mit dieser Quelle für Sollwertvorgaben gekoppelt, so würde also die Feldspritze 200 l/ha Flüssigkeit ausbringen. Hierfür würde die Steuereinheit Pumpen und Ventile in Abhängigkeit der aktuellen Geschwindigkeit und der Arbeitsbreite der Feldspritze derart in Steuersignale umrechnen, dass die gewünschte Menge Flüssigkeit auf der Fläche ausgebracht würde. Zur Messung der Geschwindigkeit kann hierbei beispielsweise ein GPS-Sensor oder ein Geschwindigkeitssensor dienen.

Im vorliegenden Fall zeigt das Symbol 13 jedoch, dass das Steuersystem mit einer zweiten Quelle für Sollwertvorgaben gekoppelt ist, auch hier ist dies eine Applikationskarte, so dass die jeweilige Ausbringmenge in Abhängigkeit der Daten eines Positionssensors an die Vorgabe aus der Applikationskarte angepasst wird.

Es ist auch denkbar, dass durch Benutzereingabe die Quelle der Sollwertvorgaben auf die dargestellten manuelle eingegebenen Sollwerte 11, 21 geändert wird und entsprechend das Symbol 13 in der Anzeige gelöscht wird. Dem Benutzer ist damit sofort gegenwärtig, welche Quelle für Sollwerte derzeit aktiv ist. Es können auch mehrere Quellen für Sollwerte vorgesehen sein, so dass in diesem Fall bevorzugt zwei Symbole angezeigt werden.

## Patentansprüche

1. Landwirtschaftliches Maschinensystem umfassend ein Anzeigesystem (1) zur Ausgabe von Informationen, eine mit dem Anzeigesystem verbundene elektronische Steuereinheit (2) zur Berechnung und/oder Ausgabe von Steuersignalen auf der Basis von Sollwertdaten (3.1, 4), eine zumindest mit der Steuereinheit (2) verbundene Kontrolleinheit (3) zur Vorgabe von Sollwertdaten (3.1, 4) an die Steuereinheit (2) und/oder zur Vorgabe einer Quelle von Sollwertdaten (3.1, 4) für die Steuereinheit (2) und eine landwirtschaftliche Bearbeitungsmaschine (5) mit zumindest einem durch Steuersignale der Steuereinheit (2) gesteuerten Aktor zur Anpassung eines Bearbeitungsparameters der landwirtschaftlichen Bearbeitungsmaschine (5),
**dadurch gekennzeichnet,**
**dass** die elektronische Steuereinheit (2) ausgebildet ist, Signale an die Anzeigeeinheit (1) zu übermitteln, so dass dem Benutzer des Maschinensystems die Quelle der verwendeten Sollwertdaten (3.1, 4) für die Berechnung und/oder Ausgabe der Steuersignale für die Ansteuerung des zumindest einen Aktors der Bearbeitungsmaschine (5) anzeigbar ist.

2. Landwirtschaftliches Maschinensystem nach Anspruch 1, **dadurch gekennzeichnet, dass** die Anzeige optisch und/oder akustisch und/oder haptisch erfolgt.

3. Landwirtschaftliches Maschinensystem nach Anspruch 1 oder 2, **dadurch gekennzeichnet, dass** das Kontrollsystem (3) ausgebildet ist eine Kopplung zwischen einer Quelle von Sollwertdaten (3.1, 4) und der Steuereinheit (2) aufzubauen.

4. Landwirtschaftliches Maschinensystem nach zumindest einem der vorhergehenden Ansprüche, **dadurch gekennzeichnet, dass** mehrere Quellen von Sollwertdaten (3.1, 4) vorhanden sind und die jeweils gewünschte Quelle von dem Benutzer durch eine Eingabe, vorzugsweise in das Anzeigesystem (1) auswählbar ist, wodurch eine Kopplung der Quelle der Sollwertdaten (3.1, 4) mit der Steuereinheit (2) etabliert wird.

5. Landwirtschaftliches Maschinensystem nach zumindest einem der vorhergehenden Ansprüche, **dadurch gekennzeichnet, dass** eine Sollwertvorgabe durch eine manuelle Eingabe eines Benutzers, vorzugsweise durch Eingabe in das Anzeigesystem (1), erfolgen kann und die elektronische Steuereinheit (2) ausgebildet ist, Signale an die Anzeigeeinheit (1) zu übermitteln, so dass dem Benutzer anzeigbar ist, wenn manuell eingegebene Sollwertvorgaben zur Berechnung und/oder Ausgabe der Steuersignale durch die Steuereinheit (2) für die Ansteuerung des zumindest einen Aktors der Bearbeitungsmaschine (5) verwendet werden.

6. Landwirtschaftliches Maschinensystem nach zumindest einem der vorhergehenden Ansprüche, **dadurch gekennzeichnet, dass** ein Positionserfassungssystem mit der Steuereinheit (2) und/oder der Kontrolleinheit (3) verbunden ist und zudem eine Applikationskarte als Quelle von Sollwertdaten (3.1, 4) in dem Maschinensystem hinterlegt ist und dem Benutzer anzeigbar ist, wenn zur Berechnung und/oder Ausgabe der Steuersignale durch die Steuereinheit (2) für die Ansteuerung des zumindest einen Aktors der Bearbeitungsmaschine (5) Sollwertdaten aus der Applikationskarte verwendet werden.

7. Landwirtschaftliches Maschinensystem nach zumindest einem der vorhergehenden Ansprüche, **dadurch gekennzeichnet, dass** ein Sensorsystem (4) zur Erfassung von Umgebungsparametern vorhanden ist, welches mit der Steuereinheit (2) und/oder der Kontrolleinheit (3) zur Ermittlung von Steuersignalen aus den Umgebungsparametern verbunden ist und dem Benutzer anzeigbar ist, wenn zur Berechnung und/oder Ausgabe der Steuersignale durch die Steuereinheit (2) für die Ansteuerung des zumindest einen Aktors der Bearbeitungsmaschine (5) Umgebungsparameter des Sensorsystems (4) verwendet werden.

8. Landwirtschaftliches Maschinensystem nach zumindest einem der vorhergehenden Ansprüche, **dadurch gekennzeichnet, dass** die Kommunikation der Steuereinheit (2) mit der Kontrolleinheit (3) und/oder der Anzeigeeinheit (1) und/oder dem Aktor der landwirtschaftlichen Bearbeitungsmaschine (5) mittels eines, vorzugsweise standardisierten, landwirtschaftlichen Bussystems, vorzugsweise mittels des sogenannten ISO-Bus, erfolgt.
